# EUROPÄISCHE PATENTANMELDUNG

(11) **EP 2 447 126 A2**
(43) Veröffentlichungstag der Anmeldung: **02.05.2012**
(21) Anmeldenummer: 11008572.7
(22) Anmeldetag: 26.10.2011
(51) Int. Cl.: B60W 40/00, B60W 30/12

(54) **Verfahren und Vorrichtung zur Bestimmung eines plausiblen Fahrstreifens zur Führung eines Fahrzeugs sowie Kraftwagen**

(30) Priorität: 30.10.2010 DE 102010050167
(71) Anmelder: Audi AG, 85045 Ingolstadt (DE)
(72) Erfinder: Göttsch, Jan, 85101 Lenting (DE); Schön, Stefan, 85049 Ingolstadt (DE); Mielich, Wolfgang, 85055 Ingolstadt (DE)
(74) Vertreter: Thielmann, Frank

(57) **Zusammenfassung**

Die Erfindung betrifft ein Verfahren zum Bestimmen eines Fahrstreifens für ein Fahrzeug (2) mit zumindest zwei unabhängigen Sensoren (S1, S2, S3, Sn, GPS) auf einer Fahrbahn (1) mit den Schritten:
a) Gewinnen von Daten zu einem ersten Fahrzeugumfeldbereich mit wenigstens einem ersten Sensor (S1, S2, S3, Sn, GPS);
b) Bestimmen (A11, A21, A31, Am1) eines ersten Fahrstreifens (uFS1, uFS2, uFS3) anhand der Daten zu dem ersten Fahrzeugumfeldbereich;
c) Gewinnen von Daten zu wenigstens einem weiteren Fahrzeugumfeldbereich mit zumindest einem weiteren Sensor (S1, S2, S3, Sn, GPS);
d) Bestimmen (A11, A21, A31, Am1) zumindest eines weiteren Fahrstreifens (uFS1, uFS2, uFS3) anhand der Daten zu dem wenigstens einen weiteren Fahrzeugumfeldbereich;
e) Bestimmen (B, C, D) eines resultierenden Fahrstreifens aus dem ersten und dem mindestens einen weiteren Fahrstreifen (uFS1, uFS2, uFS3). Die Erfindung betrifft auch eine Vorrichtung (7) zur Bestimmung eines Fahrstreifens für ein Fahrzeug (2), einen Kraftwagen (2) und ein Fahrerassistenzsystem.

## Beschreibung

Die Erfindung betrifft ein Verfahren zum Bestimmen eines Fahrstreifens für ein Fahrzeug mit zumindest zwei unabhängigen Sensoren. Die Erfindung betrifft auch eine Vorrichtung zur Bestimmung eines Fahrstreifens für ein Fahrzeug, welche zumindest zwei unabhängige Sensoren und eine Recheneinheit umfasst. Schließlich betrifft die Erfindung einen Kraftwagen oder ein Fahrerassistenzsystem mit einer solchen Vorrichtung.

Es sind verschiedenste Fahrerassistenzsysteme zur Unterstützung eines Fahrzeugführers beim Führen eines Kraftwagens bekannt. Es wird beispielsweise ein adaptives Geschwindigkeitsregelungssystem (Adaptive Cruise Control, ACC) verwendet, welches Sensoren umfasst, mit denen sich Objekte innerhalb eines Fahrzeugumfelds detektieren lassen. Die adaptive Geschwindigkeitsregelung erfolgt dann auf Grundlage der Daten zu den erfassten Objekten. Weiterhin ist ein Spurwechselassistent bekannt, der den Fahrzeugführer auf mögliche Gefahren beim Wechseln einer Fahrspur hinweist. Andere moderne Fahrzeugsysteme verwenden eine hinter der Windschutzscheibe verbaute Kamera, um in Fahrtrichtung Fahrstreifenmarkierungen (Linien, Bordsteige etc.), Verkehrshinweise (z. B. Verkehrsschilder) und Objekte (Fahrzeuge, Fußgänger etc.) zu ermitteln. Ein Spurhalteassistent verwendet z. B. die erfassten Fahrstreifenmarkierungen, um den Fahrzeugführer über eine Lenkunterstützung das Halten der Fahrspur zu erleichtern. Schließlich sind auch Scheinwerfersysteme mit gleitenden Leuchtweiten bekannt, die Objektdaten von vorausfahrenden und entgegenkommenden Fahrzeugen verwenden, um eine für den Fahrzeugführer optimale Ausleuchtung des Fahrzeugvorfelds zu erzielen, ohne dabei andere Verkehrsteilnehmer zu blenden. Die in diesen Systemen verwendeten Sensoren können auf unterschiedlichsten Technologien beruhen. So ist z. B. der Einsatz von Ultraschallsensoren, Videosystemen, Laserscannern und Radarsensoren bekannt.

Aus der Druckschrift DE 10 2006 040 334 A1 ist ein Verfahren für die Spurerfassung mit einem Fahrerassistenzsystem bekannt. Mit einem Sensorsystem für die Spurerkennung werden in einem vor dem Fahrzeug liegenden Bereich eines Verkehrsraums Fahrspurmarkierungen einer Fahrspur erfasst. Den Fahrspurmarkierungen werden Stützstellen mit Koordinaten eines ersten Koordinatensystems zugeordnet. Die Koordinaten der Stützstellen werden in ein zweites Koordinatensystem umgewandelt. Aus der Lage der Stützstellen in dem zweiten Koordinatensystem wird der Verlauf von Fahrspurmarkierungen und Fahrspuren rekonstruiert. Gegebenenfalls werden zusätzlich Stützstellen von einem Navigationssystem abgeleitet.

Des Weiteren offenbart die Druckschrift DE 10 2006 004 764 A1 eine Nutzung unterschiedlicher Sensorinformationen für eine fahrtrichtungsabhängige, schwenkbare Fahrzeugbeleuchtung. Dabei wird ein Fahrbahnverlauf aus einer Umfelderfassung und ein weiterer Fahrbahnverlauf aus einer digitalen Karte ermittelt. Beide Fahrbahnverläufe werden fusioniert.

Es ist Aufgabe der Erfindung, ein Verfahren sowie eine Vorrichtung bereitzustellen, mit dem bzw. der sich ein sicher befahrbarer Fahrstreifen für ein Fahrzeug besser bestimmen lässt.

Diese Aufgabe wird durch eine Verfahren, welches die Merkmale des Patentanspruchs 1 aufweist, eine Vorrichtung, welche die Merkmale des Patentanspruchs 9 aufweist sowie einen Kraftwagen oder ein Fahrerassistenzsystem mit den Merkmalen des Patentanspruchs 10 gelöst.

Die Erfindung betrifft ein Verfahren zum Bestimmen eines Fahrstreifens für ein Fahrzeug mit zumindest zwei unabhängigen Sensoren auf einer Fahrbahn. Die Sensoren können insbesondere selbst Teil des Fahrzeugs sein. Unter Fahrstreifen ist insbesondere ein Fläche zu verstehen, die dem Fahrzeug für die Fahrt in eine Richtung zur Verfügung steht. Die Breite des Fahrstreifens ermittelt sich dann insbesondere aus einer Fahrstreifengrundbreite und einem eventuell anzusetzenden Gegenverkehrszuschlag. Über den Fahrstreifen wird insbesondere die Fläche zur Verfügung gestellt, die das Fahrzeug zum ungehinderten Befahren benötigt. Das erfindungsgemäße Verfahren umfasst die folgenden Schritte:
a) Gewinnen von Daten zu einem ersten Fahrzeugumfeldbereich mit wenigstens einem ersten Sensor. Unter Fahrzeugumfeldbereich ist insbesondere ein Umgebungsbereich des Fahrzeugs zu verstehen, innerhalb dessen sich Objekte durch den Sensor erfassen lassen. Der Fahrzeugumfeldbereich kann also insbesondere ein Erfassungsbereich des Sensors sein. Das Gewinnen von Daten zu dem ersten Fahrzeugumfeldbereich kann jedoch auch darin bestehen, dass mit dem ersten Sensor Positionsdaten des Fahrzeugs gewonnen werden, denen dann, z. B. aus einer Datenbank, ein Fahrzeugumfeldbereich mit bestimmten Merkmalen darin enthaltener Elemente zugeordnet wird.
b) Bestimmen eines ersten Fahrstreifens anhand der Daten zu dem ersten Fahrzeugumfeldbereich. Die Daten zu dem ersten Fahrzeugumfeldbereich können insbesondere eine Berechnung des ersten Fahrstreifens erlauben.
c) Gewinnen von Daten zu wenigstens zwei weiteren Fahrzeugumfeldbereichen mit zumindest zwei weiteren Sensoren. Auch die weiteren Fahrzeugumfeldbereiche können insbesondere analog zu dem ersten Fahrzeugumfeldbereich definiert sein. Einzelne oder alle der weiteren Fahrzeugumfeldbereiche können identisch zum ersten Fahrzeugumfeldbereich sein. Sie können jedoch auch insbesondere verschieden von dem ersten Fahrzeugumfeldbereich bzw. untereinander verschieden sein. Auch wenn die einzelnen Fahrzeugumfeldbereiche identisch sind, können die mit den jeweiligen Sensoren gewonnenen Daten zu den einzelnen Fahrzeugumfeldbereichen voneinander verschieden sein und unterschiedliche Informationen beinhalten. Unter dem ersten Fahrzeugumfeldbereich und dem wenigstens einen weiteren Fahrzeugumfeldbereich sind insbesondere Umfeldbereiche des Fahrzeugs zu verstehen, die zum selben Zeitpunkt bestimmt werden.
d) Bestimmen zumindest zwei weiteren Fahrstreifen anhand der Daten zu den wenigstens zwei weiteren Fahrzeugumfeldbereichen. Zu jedem einzelnen weiteren Fahrzeugumfeldbereich kann also insbesondere jeweils ein weiterer Fahrstreifen bestimmt werden. Dieses Bestimmen kann insbesondere durch ein Berechnen auf Grundlage der Daten zu dem jeweiligen Fahrzeugumfeldbereich erfolgen.
e) Bestimmen eines resultierenden Fahrstreifens aus dem ersten und den mindestens zwei weiteren Fahrstreifen. Für die Bestimmung des resultierenden Fahrstreifens werden also insbesondere alle in den Schritten a) bis d) bestimmten Fahrstreifen herangezogen oder zumindest berücksichtigt. Der resultierende Fahrstreifen kann insbesondere identisch zu einem der bestimmten Fahrstreifen sein. Er kann jedoch auch durch eine Synthese mehrerer einzelner Fahrstreifen gebildet sein. Hierbei können nur ausgewählte einzelne oder alle Elemente der zuvor bestimmten Fahrstreifen bei der Ermittlung des resultierenden Fahrstreifens herangezogen werden. Dabei wird bei Gleichheit von zwei der mindestens drei Fahrstreifen und Ungleichheit eines dritten der mindestens drei Fahrstreifen mit den zwei Fahrstreifen der dritte Fahrstreifen für das Bestimmen des resultierenden Fahrstreifens nicht berücksichtigt.

Mit dem erfindungsgemäßen Verfahren ist es möglich, zuverlässig einen Fahrstreifen zu bestimmen, auf dem das Fahrzeug ungehindert dem Verkehrsfluss folgen kann. Es erfolgt zunächst eine Ermittlung einzelner unabhängiger Fahrstreifen durch ein oder mehrere Sensoren. Aus den Ergebnissen wird dann über ein kaskadiertes Verfahren ein resultierender Fahrstreifen bestimmt. Dieses redundante Verfahren erlaubt eine zuverlässige Ermittlung des. Fahrstreifens und erhöht somit die Exaktheit und Fehlerfreiheit der Fahrstreifenermittlung. Dem Fahrzeugführer und/oder einem oder mehreren Systemen des Fahrzeugs (Fahrerassistenzsystem, Pre-Crash-System etc.) können so genauere und bessere Informationen zur Verfügung gestellt werden. Die Fahrsicherheit wird insgesamt erhöht. Vorzugsweise werden mindestens drei unabhängige Fahrstreifen für die Bestimmung des resultierenden Fahrstreifens herangezogen.

Besonders bevorzugt ist es, wenn dem ersten und den mindestens zwei weiteren Fahrstreifen je ein Gewichtungswert zugeordnet wird und in Schritt e) beim Bestimmen des resultierenden Fahrstreifens der erste und die mindestens zwei weiteren Fahrstreifen gemäß ihrer Gewichtungswerte berücksichtigt werden. Die einzelnen Gewichtungswerte können hierbei insbesondere eine Priorität definieren, mit der die einzelnen ermittelten Fahrstreifen in das kaskadierte Verfahren einfließen sollen. Der Gewichtungswert kann sich insbesondere an der jeweiligen Verkehrssituation bzw. den Umgebungseinflüssen ausrichten. Die in den Schritten b) und d) bestimmten Fahrstreifen werden durch die Verknüpfung mit dem jeweiligen Gewichtungswert entsprechenden ihrer Relevanz bewertet und damit unterschiedlich stark bei der Bestimmung des resultierenden Fahrstreifens herangezogen. Den Fahrstreifen können auch solche Gewichtungswerte zugeordnet werden, welche verhindern, dass einzelne oder alle Merkmale des jeweiligen Fahrstreifens in den resultierenden Fahrstreifen mit einfließen. Solche Fahrstreifen finden dann zwar bei der Bestimmung des resultierenden Fahrstreifens quasi im Rahmen einer Vorauswahl Berücksichtigung; ihre Charakteristika gehen jedoch nicht in den resultierenden Fahrstreifen ein. Beispielsweise ist es jedoch auch möglich, dass Elemente aller Fahrstreifen in den resultierenden Fahrstreifen aufgenommen werden. Über den Gewichtungswert ist eine der Verkehrssituationen angepasste Berücksichtigung der jeweiligen Fahrstreifen bei der Bestimmung des resultierenden Fahrstreifens möglich. Hierdurch kann sehr präzise ein aussagekräftiger resultierender Fahrstreifen bestimmt werden.

Vorzugsweise ergibt sich in Schritt e) der resultierende Fahrstreifen durch eine Kombination von wenigstens zwei Fahrstreifen. Dann werden die wenigstens zwei Fahrstreifen bei der Bestimmung des resultierenden Fahrstreifens nicht nur im Sinne einer Vorauswahl berücksichtigt, sondern es fließen auch Elemente der wenigstens zwei Fahrstreifen in den resultierenden Fahrstreifen ein. Der resultierende Fahrstreifen ergibt sich dann durch eine Synthese der wenigstens zwei Fahrstreifen.

Vorzugsweise werden in Schritt a) und/oder in Schritt c) Daten zu einer Position und/oder einem Bewegungszustand eines Objekts gewonnen. Bei einem Objekt kann es sich insbesondere um ein anderes Fahrzeug handeln. Das Objekt befindet sich insbesondere innerhalb des Fahrzeugumfeldbereichs, zu dem Daten gewonnen werden. Insbesondere dann, wenn Positions-und/oder Bewegungszustandsdaten anderer Fahrzeuge bestimmt werden, die sich im Umfeldbereich des Fahrzeugs befinden, dessen Fahrstreifen bestimmt werden soll, lässt sich dieser Fahrstreifen sehr genau der aktuellen und sonst schwer vorhersehbaren Verkehrssituation anpassen. Unfälle werden sicher vermieden.

Weiterhin ist es bevorzugt, dass in Schritt a) und/oder in Schritt c) Daten zu Fahrspurmarkierungen gewonnen werden. Fahrspurmarkierungen geben aussagekräftige Grenzbereiche vor, innerhalb derer sich ein zu bestimmender Fahrstreifen typischerweise befinden sollte. Fahrspurmarkierungen sind einerseits vergleichsweise einfach und sicher zu detektieren und erlauben andererseits das Gewinnen aussagekräftiger Daten zu einem möglichen Fahrstreifen.

Vorzugsweise werden in Schritt a) und/oder in Schritt c) Daten aus einer digitalen Karte unter Berücksichtigung von Ausgaben eines Eigenpositionsbestimmungssensors des Fahrzeugs gewonnen. Es ist möglich, dass der in den Schritten a) und/oder d) eingesetzte Sensor insbesondere kein Sensor ist, der den jeweiligen Fahrzeugumfeldbereich direkt erfasst. Dieser kann vielmehr aus der digitalen Karte unter Heranziehung der Vorgaben des Eigenpositionsbestimmungssensors extrahiert werden. Mit dem Eigenpositionsbestimmungssensor kann insbesondere die jeweilige momentane örtliche Position des Fahrzeugs bestimmt werden und diese Position mit der digitalen Karte abgeglichen werden. Es stehen dann insbesondere Kartendaten bzw. Kartendatenattribute in einem Umfeldbereich der jeweiligen Kartenposition zur Verfügung, welche für die Bestimmung des jeweiligen Fahrstreifens herangezogen werden können. Auf diese Weise lassen sich aussagekräftige Daten zu einem Fahrzeugumfeldbereich mit vergleichsweise einfachen Mitteln gewinnen. Es ist nämlich lediglich die Eigenposition des Fahrzeugs zu bestimmen, ohne dass der Sensor direkt den jeweiligen Fahrzeugumfeldbereich zu erfassen bräuchte.

Vorzugsweise werden jedoch in Schritt a) und/oder in Schritt c) Daten mittels eines Umfeldsensors und/oder eines Fahrzustandsensors gewonnen. Der Umfeldsensor kann insbesondere dazu ausgebildet sein, Signale aus dem Fahrzeugumfeldbereich zu empfangen. Der Fahrzeugumfeldbereich kann dann insbesondere ein Erfassungsbereich des Umfeldsensors sein. Der Umfeldsensor kann auch dazu ausgebildet sein, selbst Signale in das Fahrzeugumfeld auszusenden und eine jeweilige Signalantwort abzuwarten. Der Fahrzustandssensor kann insbesondere dazu ausgebildet sein, den Fahrzustand des Fahrzeugs selbst zu ermitteln. Hierzu kann er insbesondere Daten zur Geschwindigkeit und/oder Beschleunigung des Fahrzeugs erfassen. Mit Umfeldsensoren und/oder Fahrzustandssensoren können augenblickliche und gegebenenfalls unvorhersehbare Fahrsituationen bei der Bestimmung des Fahrstreifens unmittelbar berücksichtig werden, so dass sich ein der jeweiligen Fahrsituation exakt angepasster Fahrstreifen ergibt.

Vorzugsweise umfasst das Verfahren den zusätzlichen Schritt f): Ausgeben von Steuer- und/oder Regelsignalen in Abhängigkeit des resultierenden Fahrstreifens zur zumindest teilautomatisierten Führung des Fahrzeugs auf der Fahrbahn. Die zuverlässige Ermittlung des Fahrstreifens mit der Methode der kaskadierten Fahrstreifenberechnung erlaubt ein autonomes bzw. automatisiertes Fahren des Fahrzeugs, ohne dass beispielsweise ein Eingreifen des Fahrzeugsführers erforderlich wäre. Hierzu kann insbesondere eine integrierte Quer- und/oder Längsführung bereitgestellt werden. Der im Rahmen des Verfahrens bestimmte resultierende Fahrstreifen ist so exakt, dass das Fahrzeug dem Verkehrsfluss selbständig folgen kann und der Fahrzeugführer gegebenenfalls nur noch korrigierend einzugreifen braucht.

Die erfindungsgemäße Vorrichtung dient zur Bestimmung eines Fahrstreifens für ein Fahrzeug, und umfasst zumindest drei unabhängige Sensoren sowie eine Recheneinheit. Ein erster Sensor ist dazu ausgebildet, Daten zu einem ersten Fahrzeugumfeldbereich zu gewinnen. Die zumindest zwei weiteren Sensoren sind dazu ausgebildet, Daten zu wenigstens zwei weiteren Fahrzeugumfeldbereichen zu gewinnen. Die Recheneinheit ist dazu ausgebildet, einen ersten Fahrstreifen anhand der Daten zu dem ersten Fahrzeugumfeldbereich und zumindest zwei weiteren Fahrstreifen anhand der Daten zu den wenigstens zwei weiteren Fahrzeugumfeldbereichen zu bestimmen. Die Recheneinheit ist ferner dazu ausgebildet, einen resultierenden Fahrstreifen aus dem ersten und den mindestens zwei weiteren Fahrstreifen zu bestimmen, wobei bei Gleichheit von zwei der mindestens drei Fahrstreifen und Ungleichheit eines dritten der mindestens drei Fahrstreifen mit den zwei Fahrstreifen der dritte Fahrstreifen für das Bestimmen des resultierenden Fahrstreifens nicht berücksichtigt wird.

Ein erfindungsgemäßer Kraftwagen bzw. ein erfindungsgemäßes Fahrerassistenzsystem umfasst eine erfindungsgemäße Vorrichtung.

Die mit Bezug auf das erfindungsgemäße Verfahren vorgestellten bevorzugten Ausführungsformen und deren Vorteile gelten entsprechend für die erfindungsgemäße Vorrichtung und den erfindungsgemäßen Kraftwagen bzw. das erfindungsgemäße Fahrerassistenzsystem.

Weitere Merkmale der Erfindung ergeben sich aus den Ansprüchen, den Figuren und der Figurenbeschreibung. Die vorstehend in der Figurenbeschreibung genannten Merkmale und Merkmalskombinationen wie auch die in der Figurenbeschreibung genannten Merkmale und Merkmalskombinationen und/oder die in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Anhand von Ausführungsbeispielen wird die Erfindung im Folgenden näher erläutert. Es zeigen:
- Fig. 1: eine Draufsicht auf eine Fahrbahn mit mehreren Kraftwägen;
- Fig. 2: ein Ausführungsbeispiel eines Ablaufschemas des erfindungsgemäßen Verfahrens; und

Tabelle 1 ein Tabellenbeispiel für die Ermittlung der unabhängigen Fahrstreifen für die Berechnung des Fahrstreifens für die Spurführung.

In den Figuren sind gleiche oder funktionsgleiche Elemente mit den gleichen Bezugszeichen versehen.

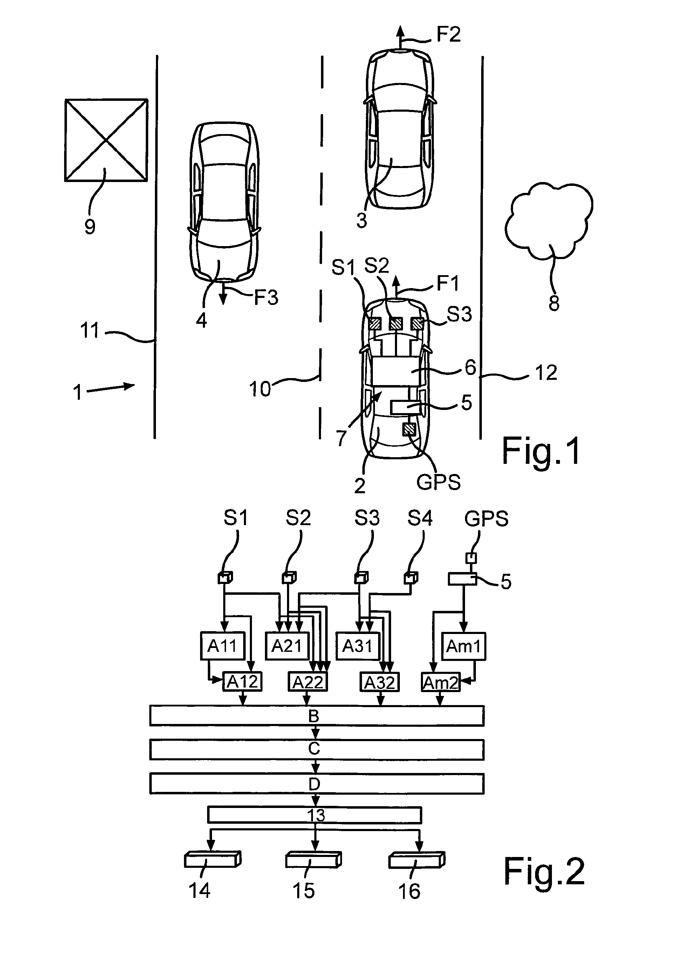

Fig. 1 zeigt einen Kraftwagen 2, welcher sich auf einer Fahrbahn 1 in Fahrtrichtung F1 bewegt. Vor dem Kraftwagen 2 fährt ein weiterer Kraftwagen 3 in dieselbe Fahrtrichtung F2. Zudem ist ein Kraftwagen 4 gezeigt, der sich auf einer Gegenfahrbahn in Fahrtrichtung F3 entgegengesetzt zum Kraftwagen 2 bewegt. Die beiden Fahrbahnen sind durch die Fahrspurmarkierung eines Mittelstreifens 10 voneinander getrennt. Die Fahrbahn 1 wird durch einen linken Bordstein 11 sowie einen rechten Bordstein 12 begrenzt, welche ebenfalls Fahrspurmarkierungen darstellen. Außerhalb der Fahrbahn 1 befindet sich links vom linken Bordstein 11 ein Haus 9, während sich rechts vom rechten Bordstein 12 ein Baum 8 befindet.

Der Kraftwagen 2 umfasst ein Fahrerassistenzsystem 7, welches drei Sensoren S1, S2 und S3, einen GPS(Global Positioning System)-Sensor GPS, eine digitale Karte 5 sowie eine Recheneinheit 6 umfasst.

In Fig. 2 ist schematisch ein Verfahren dargestellt, mit dem sich ein resultierender Fahrstreifen bestimmen und für die autonome Fahrzeugführung nutzen lässt. Der Sensor S1 ist im Ausführungsbeispiel eine Kamera, welche ein Bildverarbeitungssteuergerät umfasst. Mit Hilfe der Kamera S1 werden die dem Kraftwagen 2 vorausliegenden Fahrbahnmarkierungen (Mittelstreifen 10 und Bordsteine 11 und 12) erfasst und ausgewertet. Die Kamera S1 hat einen Erfassungsbereich, welcher einen ersten Fahrzeugumfeldbereich abdeckt. Nur solche Fahrspurmarkierungen, die innerhalb des Erfassungsbereichs der Kamera S1 liegen, werden detektiert. Die Kamera S1 stellt einen Umfeldsensor des Kraftwagens 2 dar. Aus den Daten zu den Fahrspurmarkierungen wird in Schritt A11 ein erster unabhängiger Fahrstreifen uFS1 bestimmt. In Schritt A12 wird dieser Fahrstreifen uFS1 mit einem zugehörigen Gütemaß bewertet.

Auch der Sensor S2 ist ein Umfeldsensor. Es kann dies ein Radarsensor, ein Laserscanner, ein Ultraschallsensor oder z. B. ein Photomischdetektor (PMD) sein. Auch der Sensor S3 ist ein Umfeldsensor und kann einer der Sensoren der vorgenannten Gruppe sein. Anhand der Umfeldsensoren S1, S2 und S3 werden sich in zugehörigen Fahrzeugumfeldbereichen befindliche Objekte, wie z. B. der Baum 8 und das Haus 9, erkannt. Bei den Objekten kann es sich beispielsweise um Randbebauung, Absperrungen, Straßenbegrenzungen etc. handeln. Die Sensoren S1, S2 und S3 können auch bewegte Objekte, wie z. B. andere Verkehrsteilnehmer (Kraftwägen, Fußgänger etc.), erkennen. Im Ausführungsbeispiel sind dies die Kraftwägen 3 und 4. Anhand der Daten zu den Objekten wird in Schritt A21 eine Fahrgasse ermittelt, in der sich der Kraftwagen 2 ungehindert bewegen kann. Dabei werden auch die Geschwindigkeiten der anderen Kraftwägen 3 und 4 sowie die Eigengeschwindigkeit des Kraftwagens 2 in die Bildung der Fahrgasse mit einbezogen. Auf diese Weise kann im Schritt A21 ein weiterer unabhängiger Fahrstreifen uFS2 bestimmt werden. Dieser wird wiederum im Schritt A22 mit einem Gütemaß bewertet.

Die Sensoren S3 und S4 sind Umfeldsensoren. Anhand der von ihnen bereitgestellten Informationen lassen sich im Rahmen des kaskadierten Verfahrens Spurwechsel des vorausfahrenden Kraftwagens 3 (Zielobjekt) erkennen. Befindet sich ein weiteres Fahrzeug innerhalb des Fahrstreifens wird dieses nach dem Spurwechsel als neues Zielobjekt verwendet. In Schritt A31 wird auf Basis der gewonnenen Daten zu dem Zielobjekt ein weiterer unabhängiger Fahrstreifen uFS3 ermittelt. Hierbei können auch die Daten eines weiteren Sensors Sn herangezogen werden. Auch der unabhängige Fahrstreifen uFS3 wird in Schritt A32 mit einem zugehörigen Gütemaß versehen.

Das Fahrerassistenzsystem 7 umfasst auch ein Navigationssystem, dessen wesentliche Elemente die digitale Karte 5 sowie der GPS-Sensor GPS sind. Der GPS-Sensor GPS kann die Eigenposition des Kraftwagens 2 ermitteln, und so die räumliche Lage des Kraftwagens 2 auf der digitalen Karte 5 bestimmen. Innerhalb eines vorgebbaren Fahrzeugumfeldbereichs in der Umgebung des Kraftwagens 2 auf der digitalen Karte 5 lassen sich bestimmte Kartendatenattribute, wie z. B. die Straßenkrümmung, die Anzahl der Fahrstreifen, der Straßentyp, mögliche Kreuzungen etc. bestimmen. Anhand dieser prädiktiven Streckendaten, die vom Navigationssystem bereitgestellt werden, kann der weitere Streckenverlauf berechnet werden. Dies ermöglicht die Bestimmung eines weiteren unabhängigen Fahrstreifens uFSm in Schritt Am1. Auch hier erfolgt eine Bewertung mit einem Gütemaß in Schritt Am2.

Die einzelnen Gütemaße bestimmen die Priorität, mit der die einzelnen ermittelten Fahrstreifen uFS1 bis uFSm in das kaskadierte Verfahren einfließen. Diese Priorität ist abhängig von der Verkehrssituation, von Fahrstreifenkriterien (Fahrstreifenbreite, Fahrstreifenkrümmung, Existenzmaß etc.) und weiteren Umgebungseinflüssen (z. B. Witterung).

Die in den Schritten A12, A22, A32 und Am2 mit einem jeweiligen Gütemaß versehenen Fahrstreifen uFS1, uFS2, uFS3 und uFSm werden in Schritt B miteinander verglichen. In Schritt C erfolgt die Ermittlung der unabhängigen Fahrstreifen für die Berechnung des Fahrstreifens für die Spurführung (resultierender Fahrstreifen) anhand der Tabelle 1. In einem abschließenden Schritt D des Verfahrens erfolgt die Berechnung des Fahrstreifens für die Spurführung.

Tabelle 1 berücksichtigt vereinfachend lediglich die unabhängigen Fahrstreifen uFS1, uFS2 und uFS3 bei der Bestimmung des resultierenden Fahrstreifens. Es seien zwei Beispiele aus der Tabelle 1 diskutiert:

Gemäß Spurführung 1b sind alle unabhängigen Fahrstreifen uFS1, uFS2 und uFS3 mit den Gütemaß OK bewertet. Sie werden alle drei bei der Bestimmung des resultierenden Fahrstreifens berücksichtigt. Ein Vergleich der einzelnen Fahrstreifen liefert die Ungleichheit der Fahrstreifen uFS1 und uFS2. Die Fahrstreifen uFS2 und uFS3 sind jedoch gleich. Der resultierende Fahrstreifen für die Spurführung wird dann aus den unabhängigen Fahrstreifen uFS2 und uFS3 berechnet. Der Fahrstreifen uFS1 findet keinen Einzug in die Berechnung.

In Spurführung 2b werden ebenfalls grundsätzlich die Fahrstreifen uFS1, uFS2 und uFS3 berücksichtigt. Es erfolgt hier jedoch eine Vorauswahl auf Basis des Gütemaßes. Während die Fahrstreifen uFS2 und uFS3 mit dem Gütemaß OK bewertet sind, ist der Fahrstreifen uFS1 mit dem Gütemaß NOK bewertet. Der Fahrstreifen uFS1 wird deshalb im Folgenden nicht weiter berücksichtigt. Es erfolgt der Vergleich der Fahrstreifen uFS2 und uFS3. Es ergibt sich, dass uFS2 ungleich uFS3 ist. Deshalb wird lediglich der Fahrstreifen uFS3 als resultierender Fahrstreifen für die Spurführung herangezogen.

Bei den Gütemaßen OK und NOK handelt es sich insbesondere um resultierende Gütemaße, die aus einem zugrundeliegenden Gütemaß bzw. Gewichtungswert abgeleitet werden können. Das zugrundeliegende Gütemaß kann beispielsweise einen Wert zwischen 0 % und 100 % annehmen. Es kann ein Schwellwert, z. B. der Wert 60 %, festgelegt sein. Dann kann eine Gewichtung der drei Fahrstreifen uFS1, uFS2 und uFS3 auf folgende Art und Weise erfolgen: Die zugrundeliegenden Gütemaße der Fahrstreifen uFS1, uFS2 und uFS3 betragen z. B. jeweils g1 = 50 %, g2 = 70 % bzw. g3 = 90 %. Die resultierenden Gütemaße betragen dann jeweils NOK (da 50 % < 60 %), OK (da 70 % > 60 %) bzw. OK (da 90 % > 60 %). D.h., dass der Fahrstreifen uFS1 keinen Einzug in die Ermittlung des resultierenden Fahrstreifens findet. Für den resultierenden Fahrstreifen werden lediglich die Fahrstreifen uFS2 und uFS3 z. B. gemäß ihrer jeweils zugrundeliegenden Gütemaße herangezogen; d. h. der Fahrstreifen uFS2 geht in den resultierenden Fahrstreifen mit einem Anteil von g2/(g2+g3) = 7/16 ein, während der Fahrstreifen uFS3 in den resultierenden Fahrstreifen mit einem Anteil von g3/(g2+g3) = 9/16 eingeht.

Aus dem Stand der Technik ist bisher lediglich die Ermittlung jeweils eines einzigen unabhängigen Fahrstreifens bekannt. Diese so ermittelten unabhängigen Fahrstreifen könnten im Rahmen des hier vorgeschlagenen Verfahrens als einer der zumindest zwei unabhängigen Fahrstreifen Einzug in das kaskadierte Ermittlungsverfahren für den resultierenden Fahrstreifen finden. Dabei werden die einzelnen unabhängigen Fahrstreifen anhand ihrer Güte bewertet, miteinander verglichen und abhängig vom Ergebnis wird dann aus einem, mehreren oder allen unabhängigen Fahrstreifen ein einziger resultierender Fahrstreifen berechnet.

Auf Grundlage des resultierenden Fahrstreifens kann letztlich eine Regelung erfolgen. Diese Regelung besteht im Ausführungsbeispiel in einer Quer- und einer Längsregelung des Kraftwagens 2. Hierzu wird die in Schritt D gelieferte Information über den resultierenden Fahrstreifen an einen Quer- und Längsregler 13 des Kraftwagens 2 übergeben. Der Quer- und Längsregler 13 regelt dann einen Antrieb 14, eine Bremse 15 und/oder eine Lenkung 16 des Kraftwagens 2.

**Tabelle 1:**

| | | | | | |
|---|---|---|---|---|---|
| Spurführung 1 | Fahrstreifen | | uFS1 | uFS2 | uFS3 |
| | Gütemaß | | OK | OK | OK |
| | | Vergleich der Fahrstreifen | | Fahrstreifen für die Spurführung | |
| | a | uFS1 = uFS2 = uFS3 | | uFS1, uFS2, uFS3 | |
| | b | uFS1 ≠ uFS2 = uFS3 | | uFS2, uFS3 | |
| | c | uFS1 = uFS3 ≠ uFS2 | | uFS1, uFS3 | |
| | d | uFS1 = uFS2 ≠ uFS3 | | uFS1,uFS2 | |
| | e | uFS1 ≠ uFS2 ≠ uFS3 | | uFS3 | |
| Spurführung 2 | Fahrstreifen | | uFS1 | uFS2 | uFS3 |
| | Gütemaß | | NOK | OK | OK |
| | | Vergleich der Fahrstreifen | | Fahrstreifen für die Spurführung | |
| | a | uFS2 = uFS3 | | uFS2, uFS3 | |
| | b | uFS2 ≠ uFS3 | | uFS3 | |
| Spurführung 3 | Fahrstreifen | | uFS1 | uFS2 | uFS3 |
| | Gütemaß | | OK | NOK | OK |
| | | Vergleich der Fahrstreifen | | Fahrstreifen für die Spurführung | |
| | a | uFS1 = uFS3 | | uFS1, uFS3 | |
| | b | uFS1 ≠ uFS3 | | uFS3 | |
| Spurführung 4 | Fahrstreifen | | uFS1 | uFS2 | uFS3 |
| | Gütemaß | | OK | OK | NOK |
| | | Vergleich der Fahrstreifen | | Fahrstreifen für die Spurführung | |
| | a | uFS1 = uFS2 | | uFS1, uFS2 | |
| | b | uFS1 ≠ uFS2 | | uFS2 | |
| Spurführung 5 | Fahrstreifen | | uFS1 | uFS2 | uFS3 |
| | Gütemaß | | NOK | NOK | OK |
| | | Vergleich der Fahrstreifen | | Fahrstreifen für die Spurführung | |
| | a | uFS3 | | uFS3 | |
| Spurführung 6 | Fahrstreifen | | uFS1 | uFS2 | uFS3 |
| | Gütemaß | | OK | NOK | NOK |
| | | Vergleich der Fahrstreifen | | Fahrstreifen für die Spurführung | |
| | a | uFS1 | | uFS1 | |
| Spurführung 7 | Fahrstreifen | | uFS1 | uFS2 | uFS3 |
| | Gütemaß | | NOK | OK | NOK |
| | | Vergleich der Fahrstreifen | | Fahrstreifen für die Spurführung | |
| | a | uFS2 | | uFS2 | |

## Patentansprüche

1. Verfahren zum Bestimmen eines Fahrstreifens für ein Fahrzeug (2) mit zumindest zwei unabhängigen Sensoren (S1, S2, S3, Sn, GPS) auf einer Fahrbahn (1) mit den Schritten:
a) Gewinnen von Daten zu einem ersten Fahrzeugumfeldbereich mit wenigstens einem ersten Sensor (S1, S2, S3, Sn, GPS);
b) Bestimmen (A11, A21, A31, Am1) eines ersten Fahrstreifens (uFS1, uFS2, uFS3) anhand der Daten zu dem ersten Fahrzeugumfeldbereich;
**gekennzeichnet durch**
c) Gewinnen von Daten zu wenigstens zwei weiteren Fahrzeugumfeldbereichen mit zumindest zwei weiteren Sensoren (S1, S2, S3, Sn, GPS);
d) Bestimmen (A11, A21, A31, Am1) zumindest zwei weiterer Fahrstreifen (uFS1, uFS2, uFS3) anhand der Daten zu den wenigstens zwei weiteren Fahrzeugumfeldbereichen;
e) Bestimmen (B, C, D) eines resultierenden Fahrstreifens aus dem ersten und den mindestens zwei weiteren Fahrstreifen (uFS1, uFS2, uFS3), wobei bei Gleichheit von zwei der mindestens drei Fahrstreifen und Ungleichheit eines dritten der mindestens drei Fahrstreifen mit den zwei Fahrstreifen der dritte Fahrstreifen für das Bestimmen des resultierenden Fahrstreifens nicht berücksichtigt wird.

2. Verfahren nach Anspruch 1,
**dadurch gekennzeichnet, dass**
dem ersten und den mindestens zwei weiteren Fahrstreifen (uFS1, uFS2, uFS3) je ein Gewichtungswert (OK, NOK, g1, g2, g3) zugeordnet wird und in Schritt e) beim Bestimmen (B, C, D) des resultierenden Fahrstreifens der erste und die mindestens zwei weiteren Fahrstreifen (uFS1, uFS2, uFS3) gemäß ihrer Gewichtungswerte (OK, NOK, g1, g2, g3) berücksichtigt werden.

3. Verfahren nach Anspruch 1 oder 2,
**dadurch gekennzeichnet, dass**
in Schritt e) der resultierende Fahrstreifen durch eine Kombination von wenigstens zwei Fahrstreifen (uFS1, uFS2, uFS3) bestimmt wird.

4. Verfahren nach einem der vorhergehenden Ansprüche,
**dadurch gekennzeichnet, dass**
in Schritt a) und/oder in Schritt c) Daten zu einer Position und/oder einem Bewegungszustand eines Objekts (2, 3, 4, 8, 9), insbesondere eines anderen Fahrzeugs (3, 4), gewonnen werden.

5. Verfahren nach einem der vorhergehenden Ansprüche,
**dadurch gekennzeichnet, dass**
in Schritt a) und/oder in Schritt c) Daten zu Fahrspurmarkierungen (10, 11, 12) gewonnen werden.

6. Verfahren nach einem der vorhergehenden Ansprüche,
**dadurch gekennzeichnet, dass**
in Schritt a) und/oder in Schritt c) Daten aus einer digitalen Karte (5) unter Berücksichtigung von Ausgaben eines Eigenpositionsbestimmungssensors (GPS) des Fahrzeugs (2) gewonnen werden.

7. Verfahren nach einem der vorhergehenden Ansprüche,
**dadurch gekennzeichnet, dass**
in Schritt a) und/oder in Schritt c) Daten mittels eines Umfeldsensors (S1, S2, S3) und/oder eines Fahrzustandsensors gewonnen werden.

8. Verfahren nach einem der vorhergehenden Ansprüche,
**gekennzeichnet durch**
den zusätzlichen Schritt
f) Ausgeben von Steuer- und/oder Regelsignalen in Abhängigkeit des resultierenden Fahrstreifens zur zumindest teilautomatisierten Führung (13) des Fahrzeugs (2) auf der Fahrbahn (1).

9. Vorrichtung (7) zur Bestimmung eines Fahrstreifens für ein Fahrzeug (2), welche zumindest drei unabhängige Sensoren (S1, S2, S3, Sn, GPS) und eine Recheneinheit (6) umfasst, wobei
- ein erster Sensor (S1, S2, S3, Sn, GPS) dazu ausgebildet ist, Daten zu einem ersten Fahrzeugumfeldbereich zu gewinnen;
**dadurch gekennzeichnet, dass**
- die zumindest zwei weiteren Sensoren (S1, S2, S3, Sn, GPS) dazu ausgebildet sind, Daten zu wenigstens zwei weiteren Fahrzeugumfeldbereichen zu gewinnen;
- die Recheneinheit (6) dazu ausgebildet ist, einen ersten Fahrstreifen (uFS1, uFS2, uFS3) anhand der Daten zu dem ersten Fahrzeugumfeldbereich und zumindest zwei weitere Fahrstreifen (uFS1, uFS2, uFS3) anhand der Daten zu den wenigstens zwei weiteren Fahrzeugumfeldbereichen zu bestimmen (A11, A21, A31, Am1), und ferner dazu ausgebildet ist, einen resultierenden Fahrstreifen aus dem ersten und den mindestens zwei weiteren Fahrstreifen zu bestimmen (B, C, D), wobei
- bei Gleichheit von zwei der mindestens drei Fahrstreifen und Ungleichheit eines dritten der mindestens drei Fahrstreifen mit den zwei Fahrstreifen der dritte Fahrstreifen für das Bestimmen des resultierenden Fahrstreifens nicht berücksichtigt wird.

10. Kraftwagen (2) oder Fahrerassistenzsystem mit einer Vorrichtung (7) nach Anspruch 9.
